# EUROPEAN PATENT APPLICATION

(11) **EP 1 879 414 A1**
(43) Date of publication of application: **16.01.2008**
(21) Application number: 06014745.1
(22) Date of filing: 14.07.2006
(51) Int. Cl.: H04Q 7/38

(54) **Mitigation of cell signaling load caused by tracking area updates**

(71) Applicant: Nokia Siemens Networks GmbH & Co. KG, 81541 München (DE)
(72) Inventor: Fehriger, Manfred, 3300 Winklarn - Haag Dorf (AT); Unteregger, Burghard, 1040 Wien (AT)

(57) **Abstract**

The invention concerns devices and a method for handling a user equipment (UE1;UE2;UE3) being moved ("direction of movement" arrow in Fig. 1) within at least one cellular mobile telecommunication network from a first tracking area (TA1) to a further tracking area (TA2),
wherein the user equipment (UE1;UE2;UE3), initially being in a first tracking area (TA1) of a mobile telecommunication network, receives from the cellular mobile telecommunication network
- first tracking area information (TA1), the first tracking area information (TA1) indicating a first area comprising a first group of cells (TA1: cell 1, cell 4, cell 5),
- first cell ID information concerning the cell (cell 1) in which the user equipment initially is (UE1;UE2;UE3), and
- first additional cell ID information (UE3:-,UE2:"cell 2",UE1:"cell2,cell3") concerning cells which are outside the first area indicated by the first tracking area information (TA1),
wherein the user equipment (UE1;UE2;UE3) stores received tracking area information (TA1;TA2), and
wherein the user equipment (UE1;UE2;UE3) stores receives additional cell ID information (UE3:-,UE2:"cell 2",UE1:"cell2,cell 3"),
wherein the user equipment (UE1;UE2;UE3), later ("direction of movement" arrow) being in the further tracking area (TA2) of a cellular mobile telecommunication network, receives from the cellular mobile telecommunication network
- further tracking area information (TA2), the further tracking area information (TA2) indicating an area comprising a further group of cells (TA2:cell2,cell3),
- further cell ID information concerning the cell (cell2) in which the user equipment is afterwards,
wherein the user equipment (UE1;UE2;UE3) only triggers a tracking area (TA) update if both of the two following conditions are met:
- the first tracking area information (TA1) and the further tracking area information (TA2) are not equal and
- the further cell ID information (cell2), indicating a cell in which the user equipment is afterwards, is not found in the previously stored list of first additional cell ID information (UE3:-,UE2:"cell 2",UE1:"cell2,cell3") concerning cells which are outside the first tracking area indicated by the first tracking area information (TA1).

## Description

The invention concerns methods and devices for area updates in mobile telecommunication networks.

Cellular mobile telecommunication networks are known from e.g. GSM standards (www.etsi.com), 3G standards (www.3gpp.com) and other standards.

Cells covered by mobile network base transmitter stations are organized in larger units e.g. Registraion or "Tracking Areas" (TA) as it will be called in evolved UTRAN for the following reasons. If a user equipment UE drives through the cells and is in an idle state, it still should be reachable i.e. the user equipment UE listens to the paging channel of the cell where it actually resides.

To allow this, the user equipment UE reads the Area ID of the cell from the cell broadcast and compares it to its stored ID. If the IDs are identical, the user equipment UE knows that the network is aware of its location and will page it in all cells belonging to this area. If the IDs are different, the user equipment UE perfoms an area update to notify the network of its new location and it stores the new Area ID as its current Area ID.

Problems arise in the cells between 2 areas. UEs changing from one area into the other area perfom location updates in the first cell in the new area, thus increasing the signalling load in these particual border cells. The load increase may be prohibitive if the border crosses a region of high mobility, e.g. a highway (which is a reasonably occuring scenarion considering the lenght of a highway vs. the limited dimensions of a tracking area TA).

The invention mitigates the signalling load in the border cells, by allowing area updates in other cells than the border cells individually per user equipment UE without loosing track of the UE.

Some methods were so far proposed to offer signalling load mitigation:
1) The trivial solution is to have just a single TA in the whole network:
   Of course this would imply that each user equipment UE is paged in all cells of the network creating unbearable traffic throughout all cells, a fact which was one reason to introduce the areas.
2) Overlapping tracking areas:
   A cell may belong to more than one TA, and UEs reading this in the cell broad-cast and having one of them stored do not perform area update.
3) User equipment UE stores and is registered within a list of TAs:
   User equipment UE performs only a TA update, if a cell's TA is not in the list.
4) Distance or angle based TA:
   Each user equipment UE carries it's own TA which is dervied by a certain fucntion from it's last registration position.

It is an object of the invention to improve cell signaling for tracking area updates.
The object is achieved by the invention defined in the claims.

The proposed new method can mitigate the problem by utilizing available resources:
1) The TA ID as broadcasted in the cell system information
2) The cell ID as broadcasted in the cell system information

The following steps support this:
1) If a user equipment UE registers in a cell, it stores the TA-ID which is broadcasted in this cell.
2) Together with the dedicated regstration signalling, the network can signal a list of cell IDs which are additionally stored in the UE
3) A user equipment UE performs a TA update only if both of following conditons are not met anymore in case user equipment UE moves ot a cell:
   a. The cell TA is not equal the TA stored.
   b. The cell id is not found in the stored Cell-id list.

As a features for optimization it may be considered that the settings can be individual depending on the predicted movement of a UE.

Further details and possible advantages are, without limitation of the scope, defined in the claims and explained in the following description of an example for implementing the invention.

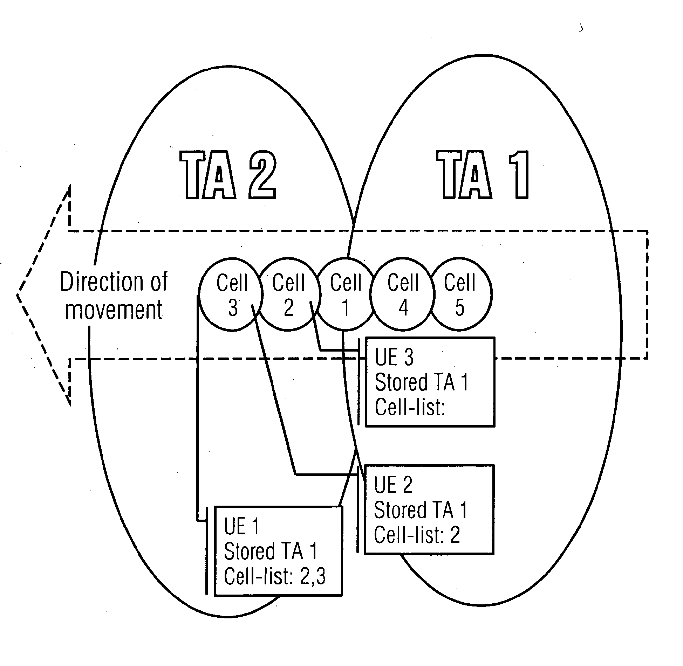

Figure 1 shows an example for implementing the invention.

Cellular mobile telecommunication networks as such are known from e.g. GSM standards (www.etsi.com), 3G standards (www.3gpp.com) and other standards and they are therefore not described in detail here.
Figure 1 shows two tracking areas TA1 and TA2 of a cellular mobile telecommunication network.
Inside tracking area TA1 are the cells: cell 1, cell 4 and cell 5.
Tracking area TA2 comprises the cells: cell 2 and cell 3.

The example in figure 1 is considering three user equipments UE1, UE2, UE2 (which are designed for use in cellular mobile telecommunication networks) moving (e.g. on a highway), mainly moving from the right to the left in figure 1 (indicated by arrow "direction of movement").
The last transaction area where they were registered is TA 1.

Without additional measures according to the invention, i.e. as e.g. shown for user equipment UE 3 in the example in figure 1, the tracking area (TA) updates of the user equipment (UE3) would generally be performed in cell 2 after leaving tracking area TA1, i.e. e.g. when leaving cell 1 and entering cell 2.

However user equipment UE 2 is (according to the invention) directed to perform its tracking area (TA) update in cell 3 and user equipment U3 is directed to perform its tracking area update beyond cell 3 (in a cell which is not shown in figure 1).

This can be done according to the invention as follows: User equipment UE1 moves ("direction of movement" arrow) within a cellular mobile telecommunication network from a first tracking area TA1 to a further tracking area TA2.
While user equipment UE1 is in the first tracking area TA1 of the mobile telecommunication network, it receives from the cellular mobile telecommunication network :
- first tracking area information TA1, the first tracking area information TA1 indicating a first area comprising a first group of cells (TA1: cell 1, cell 4, cell 5),
- first cell ID information concerning the cell (cell 1) in which the user equipment UE1 currently is, and
- first additional cell ID information "cell 2,cell 3" concerning cells which are outside the first area indicated by the first tracking area information TA1,
User equipment UE1 stores received tracking area information TA1, and it stores received first additional cell ID information "cell 2, cell 3" in a list.

User equipment UE1 is moved ("direction of movement" arrow) and later (=after being moved) it is in the further tracking area TA2 of the cellular mobile telecommunication network.
In tracking area TA2, UE1 receives from the cellular mobile telecommunication network
- further tracking area information TA2, the tracking area information TA2 indicating an area comprising a further group of cells "cell 2, cell 3",
- further cell ID information concerning the cell (e.g. "cell 2", afterwards "cell 3", etc) in which the user equipment currently (later= after being moved from TA1 to TA2) is.

User equipment UE1 afterwards (after UE1 moved to TA2) only triggers a tracking area (TA) update with the cellular telecommunication network if both of the two following conditions are met:
- the first tracking area information TA1 (received by UE1 before being moved from TA 1 to TA2) and the further tracking area information TA2 (received by UE1 after being moved from TA 1 to TA2) are not equal and
- the further cell ID information (e.g. a cell on the left of "cell 2" and "cell 3" in fig. 1etc), indicating a cell in which the user equipment (later) currently is, is not found in the previously received and stored list of first additional cell ID information "cell 2, cell 3" concerning cells which are outside the first tracking area TA1 indicated by the first tracking area information (TA1) received earlier.

In Fig. 1 UE 3 does not receive first additional cell ID information concerning cells which are outside the first tracking area indicated by the first tracking area information (TA1) and therefore UE1 triggers a tracking area (TA) update when it leaves TA 1 and enters cell2 of TA2.
In Fig. 1 UE 2 receives first additional cell ID information "cell 2" concerning a cell ("cell 2") which is outside the first tracking area indicated by the first tracking area information (TA1) and therefore, UE2 does not trigger a tracking area (TA) update when it leaves TA 1 and enters cell2 of TA2, but UE2 triggers a tracking area (TA) update when it leaves TA 1 and enters cell3 of TA2.
In Fig. 1 UE 1 receives first additional cell ID information "cell 2,cell 3" concerning cells ("cell 2,cell 3") which are outside the first tracking area indicated by the first tracking area information (TA1) and therefore, UE3 does not trigger a tracking area (TA) update when it leaves TA 1 and enters cell2 or cell 3of TA2, but UE3 triggers a tracking area (TA) update when it leaves TA 1 and enters an other (not shown) cell than cell2 or cell3 3 of TA2 or an other tracking area than TA1/TA2.

## Claims

1. Method for handling a user equipment (UE1; UE2; UE3) being moved ("direction of movement" arrow in Fig. 1) within at least one cellular mobile telecommunication network from a first tracking area (TA1) to a further tracking area (TA2),
wherein the user equipment (UE1; UE2; UE3), initially being in a first tracking area (TA1) of a mobile telecommunication network, receives from the cellular mobile telecommunication network
- first tracking area information (TA1), the first tracking area information (TA1) indicating a first area comprising a first group of cells (TA1: cell 1, cell 4, cell 5),
- first cell ID information concerning the cell (cell 1) in which the user equipment initially is (UE1; UE2; UE3), and
- first additional cell ID information (UE3: -, UE2: "cell 2", UE 1: "cell 2,cell 3") concerning cells which are outside the first area indicated by the first tracking area information (TA1),
wherein the user equipment (UE1; UE2; UE3) stores received tracking area information (TA1), and
wherein the user equipment (UE1; UE2; UE3) stores received additional cell ID information (UE3: -, UE2: "cell 2", UE 1: "cell 2, cell 3"),
wherein the user equipment (UE1; UE2; UE3), afterwards ("direction of movement" arrow) being in the further tracking area (TA2) of a cellular mobile telecommunication network, receives from the cellular mobile telecommunication network
- further tracking area information (TA2), the further tracking area information (TA2) indicating an area comprising a further group of cells (TA2: cell 2, cell 3),
- further cell ID information concerning the cell (cell 2) in which the user equipment is afterwards,
wherein the user equipment (UE1; UE2; UE3) only triggers a tracking area (TA) update if both of the two following conditions are met:
- the first tracking area information (TA1) and the further tracking area information (TA2) are not equal and
- the further cell ID information (cell 2), indicating a cell in which the user equipment is afterwards, is not found in the previously stored list of first additional cell ID information (UE3: -, UE2: "cell 2", UE 1: "cell 2,cell 3") concerning cells which are outside the first tracking area indicated by the first tracking area information (TA1).

2. Method according to any of the preceding claims,
**characterized in that** tracking area information (TA1; TA2) respectively indicates a tracking area comprising a group of cells (TA1: cell 1, cell 4, cell 5; TA2: cell 2, cell 3) locally within that tracking area (TA1; TA2).

3. Method according to any of the preceding claims,
**characterized in that** additional cell ID information (cell 2; or cell 2 and cell 3) sent from the cellular mobile telecommunication network to the user equipment (UE1; UE2; UE3) represents IDs of cells (cell 2; or cell 2 and cell 3) which are not in the tracking area defined by the tracking area information (TA1) that is sent to the user equipment (UE1; UE2; UE3) but cells (cell 2; or cell 2 and cell 3) outside the tracking area (TA1) the user equipment (UE1; UE2; UE3) is currently in.

4. Method according to claim 3, **characterized in that** the additional cell ID information sent within the named area information from the cellular mobile telecommunication network to the user equipment (UE1; UE2) represents the ID of at least one cell (cell 2) that is adjacent to the tracking area defined by the tracking area information (TA1) that is also sent to the user equipment (UE1; UE2).

5. Method according to claim 4, **characterized in that** all he additional cell ID information sent within the named area information from the cellular mobile telecommunication network to the user equipment (UE1; UE2) represents IDs of cells (cell 2) that are all adjacent to the tracking area defined by the tracking area information (TA1) that is also sent to the user equipment (UE1; UE2).

6. Method according to claim 3 or 4, **characterized in that** the additional cell ID information sent within the named area information from the cellular mobile telecommunication network to the user equipment (UE1) represents the ID of at least one cell (cell 3) that is adjacent to a cell (cell 2) that is adjacent to the tracking area (TA1) defined by the tracking area information that is also sent to the user equipment (UE1).

7. Method according to any of the preceding claims,
**characterized in that** the first tracking area (TA1) and the further tracking area (TA2) are in the same telecommunication network.

8. Method according to any of the claims 1 to 6,
**characterized in that** the first tracking area (TA1) and the further tracking area (TA2) are in separate telecommunication networks.

9. Method according to any of the preceding claims,
**characterized in that** a tracking area ID (TA1; TA2) and cell ID information are broadcasted by the cellular mobile telecommunication network.

10. Method according to any of the preceding claims,
**characterized in that**
together with registration signalling, the user equipment receives from the network a list of cell IDs which are additionally stored in the UE.

11. Method according to any of the preceding claims,
**characterized in that**
the user equipment (UE1; UE2; UE3) triggers a tracking area (TA) update by sending a message to the cellular telecommunication network.

12. Method according to any of the preceding claims,
**characterized in that**
the settings, especially the definition of cells in the additional cell ID information, can be individual depending on the predicted movement of a UE.

13. User equipment (UE1), for supporting a method according to any of the preceding claims.

14. User equipment (UE1), especially according to claim 13,
**characterized in that** it comprises a processor which only triggers a tracking area (TA) update if both of the two following conditions are met:
- first area information (TA1), received from a cellular mobile telecommunication network before the user equipment (UE1) moved from a first tracking area (TA1) to a further tracking area (TA2),
and further area information (TA2) received from a mobile telecommunication network after the user equipment (UE1) moved from the first tracking area (TA1) to the further tracking area (TA2),
are not equal and
- further cell ID information (cell 2 or cell 3 etc), indicating a cell in which the user equipment (UE1) is after moving from a first tracking area (TA1) to a further tracking area (TA2), is not found in a previously received and stored list of first additional cell ID information (UE3: -, UE2: "cell 2", UE 1: "cell 2,cell 3") concerning cells which are outside the first area indicated by the tracking area information (TA1) received before the user equipment (UE1) before moving from the first tracking area (TA1) to the further tracking area (TA2).

15. Cellular mobile telecommunication network component for supporting a method according to any of the preceding claims.

16. Cellular mobile telecommunication network component, especially according to claim 15,
**characterized in that** it
is designed to send to a user equipment (UE1) :
- first tracking area information (TA1), the first tracking area information (TA1) indicating a first area comprising a first group of cells (TA1: cell 1, cell 4, cell 5),
- first cell ID information concerning the cell (cell 1) in which the user equipment is (UE1; UE2; UE3) is, and
- first additional cell ID information (UE3: -, UE2: "cell 2", UE 1: "cell 2,cell 3") concerning cells which are outside the first tracking area (TA1) indicated by the first tracking area information (TA1).
